# EUROPÄISCHE PATENTSCHRIFT

(11) **EP 3 008 354 B1**
(45) Veröffentlichungstag und Bekanntmachung des Hinweises auf die Patenterteilung: **26.04.2017**
(21) Anmeldenummer: 14729585.1
(22) Anmeldetag: 13.05.2014
(51) Int. Cl.: F16C 35/077, F16C 35/078, F16C 13/02, F16C 23/06, F16C 23/08

(54) **LAGERANORDNUNG**
BEARING ARRANGEMENT
ENSEMBLE PALIER

(30) Priorität: 13.06.2013 DE 102013210987
(43) Veröffentlichungstag der Anmeldung: 20.04.2016
(73) Patentinhaber: Schaeffler Technologies AG & Co. KG, 91074 Herzogenaurach (DE)
(72) Erfinder: DITTENHÖFER, Thomas, 97519 Humprechtshausen (DE); POPP, Stephan, 91448 Emskirchen (DE)
(86) Internationale Anmeldenummer: PCT/DE2014/200211
(87) Internationale Veröffentlichungsnummer: WO 2014/198269

(56) Entgegenhaltungen:
- DE-A1-102005 045 987
- DE-A1-102008 001 546

## Beschreibung

### Gebiet der Erfindung

Die Erfindung betrifft eine Lageranordnung für ein um eine Achse drehend zu lagerndes Bauteil wie Zylinder, Walze, Trommel oder Welle, umfassend wenigstens ein Wälzlager, das in einem Lagergehäuse aufgenommen ist, das über wenigstens eine Linearführung linear bewegbar in einem Anordnungsgehäuse beweglich gelagert ist, sowie umfassend eine Stelleinrichtung zur Erwirkung einer linearen Verstellbewegung des Lagergehäuses senkrecht zur Achse zwischen einer Ruhestellung und einer Arbeitsstellung.

### Hintergrund der Erfindung

Derartige Lageranordnungen mit linear verstellbarem Wälzlager kommen beispielsweise bei Druckmaschinen zur Walzenan- und -abstellung zum Einsatz. Ein Beispiel für eine solche Lageranordnung ist aus DE 101 45 322 A1 bekannt. Als Stelleinrichtung ist dort ein Hydraulikzylinder vorgesehen, der mit Druck beaufschlagt wird, um das Lagergehäuse samt Wälzlager zu bewegen, um die gelagerte Walze anzustellen, also gegen die zweite Druckwalze zu bewegen. Zwischen den beiden Walzen läuft das Druckgut, das heißt, dass letztlich ein schmaler Spalt für das Druckgut gegeben ist, das zwangsläufig berührend zwischen den Druckwalzen durchläuft. Die Druckwalzen sind gegenseitig auf Pressung angestellt. Systembedingt handelt es sich hierbei um ein schwingungsbelastetes System, das heißt, dass aufgrund der Walzenrotation und des Durchlaufs des Druckgutes Schwingungen auf die bewegliche, angestellte Walze übertragen werden, die auf die Lageranordnung übertragen werden. Die Schwingungen liegen im µm-Bereich.

Wenngleich sich mit einer solchen bekannten Lageranordnung eine gute Walzenanstellung und Abstellung erreichen lässt, ist das System gleichwohl verbesserungswürdig. Zum einen steht der Hydraulikzylinder, wenn die Walze angestellt, also in Arbeitsstellung ist, ständig unter hohem Druck. Damit einher geht ein erhöhtes Verschleißrisiko des Hydraulikdichtsystems. Zum anderen wird infolge der kontinuierlichen Schwingungsbelastung dieses Verschleißrisiko erhöht, da natürlich zwangsläufig auch das Hydrauliksystem infolge der Schwingung kontinuierlich höher frequent belastet wird.

### Aufgabe der Erfindung

Der Erfindung liegt damit die Aufgabe zugrunde, eine Lageranordnung der eingangs genannten Art anzugeben, die hinsichtlich der Verschleißfestigkeit verbessert ist.

### Beschreibung der Erfindung

Zur Lösung dieser Aufgabe ist erfindungsgemäß bei einer Lageranordnung der eingangs genannten Art vorgesehen, dass die Stelleinrichtung wenigstens ein vorgespanntes Federelement umfasst, das das Lagergehäuse in die Arbeitsstellung drückt, sowie wenigstens eine Hydraulik- oder Pneumatikeinrichtung zur Erzeugung einer gegen das Federelement arbeitenden Rückstellkraft zum Bewegen des Lagergehäuses in die Ruhestellung.

Bei der erfindungsgemäßen Lageranordnung wird die Kraft, die zum Bewegen des Lagergehäuses und damit des Wälzlagers aus der Ruhe- in die Arbeitsstellung erforderlich ist, durch wenigstens ein vorgespanntes Federelement erzeugt. Das heißt, dass die gelagerte Walze oder dergleichen allein durch die von dem Federelement auf das Lagergehäuse ausgeübte Kraft angestellt wird. Ein hydraulisch oder pneumatisch arbeitendes Stellmittel ist hierfür nicht vorgesehen. Ein solches kommt lediglich zum Einsatz, um das Lagergehäuse aus der Arbeitsstellung in die Ruhestellung zurückzubringen, mithin also die Walze abzustellen. Diese Hydraulik- oder Pneumatikeinrichtung arbeitet also gegen das Federelement.

Soll also die Walze angestellt werden, so ist es lediglich erforderlich, die Hydraulik- oder Pneumatikeinrichtung zu entlasten. Das vorgespannte Federelement drückt das Lagergehäuse in die Arbeitsstellung, die Walze wird angestellt. Kommt es nun in dieser Arbeitsstellung zu etwaigen Schwingungen, so haben diese keinen schädlichen Einfluss auf die Hydraulik- oder Pneumatikeinrichtung, da die Dichtungen im schwingungsbehafteten Betrieb nicht durch den Betriebsdruck an die Gegenlauffläche gepresst werden. Die Schwingungen werden lediglich am Federelement eingetragen und dort aufgenommen.

Soll die Walze wieder abgestellt werden, so wird die Hydraulik- oder Pneumatikeinrichtung betätigt, die einen so hohen Druck respektive eine so hohe Kraft erzeugt, dass das Federelement wieder komprimiert wird und das gekoppelte Lagergehäuse wieder zurück in die Ruhestellung gebracht wird. Da in dieser Stellung die gelagerte Walze nicht arbeitet, kommt es folglich auch zu keinem Schwingungseintrag in das Hydraulik- oder Pneumatiksystem, das demzufolge in dieser Weise nicht belastet wird. Darüber hinaus wird die Hydraulik- oder Pneumatikeinrichtung lediglich zugeschaltet, wenn die Walze abgestellt werden soll, also in die Ruhestellung zu bewegen ist.

Insgesamt lässt die erfindungsgemäße Lageranordnung, bei der die Hydraulik- oder Pneumatikeinrichtung lediglich zum Bewegen in die Ruhestellung genutzt wird, eine wesentlich geringere Beanspruchung der Hydraulik- oder Pneumatikeinrichtung zu, nachdem der Druckkolben der Hydraulik- oder Pneumatikeinrichtung in der Arbeitsstellung drucklos ist. Folglich lässt sich der Verschleiß des Dichtsystems deutlich verringern.

Das Federelement ist selbstverständlich so auszulegen, dass es eine hinreichende Kraft erzeugt, um die Linearverstellung zu erwirken. Sofern möglich reicht ein Federelement aus. Denkbar ist es aber auch, zwei oder mehr Federelemente vorzusehen, die dann bevorzugt symmetrisch relativ zu der einen oder zu den mehreren Hydraulik- oder Pneumatikeinrichtungen verteilt angeordnet sind. Kommen also beispielsweise zwei Federelemente und eine Hydraulik- oder Pneumatikeinrichtung zum Einsatz, so ist die Hydraulik- oder Pneumatikeinrichtung bevorzugt mittig zwischen den beiden Federelementen angeordnet, um eine möglichst symmetrische Kraft- respektive Druckverteilung zu erreichen. Neben der Verwendung mehrerer Federelemente können selbstverständlich auch mehrere Hydraulik- oder Pneumatikeinrichtungen verwendet werden. Dies insbesondere, wenn über das oder die mehreren Federelemente hohe Kräfte zu erzeugen sind, mithin also sehr starke Federn, die einer hohen Rückstellkraft bedürfen, verwendet werden.

Die Stelleinrichtung selbst umfasst ein Gehäuse, wobei dem oder jedem Federelement ein im Gehäuse bewegbar angeordneter Bolzen zugeordnet ist, der vom Federelement gegen das Lagergehäuse gedrückt wird, und der mit der von dem oder den Hydraulik- oder Pneumatikeinrichtungen erzeugten Rückstellkraft beaufschlagbar ist. Das Lagergehäuse ist folglich über den oder die Bolzen mit den Federelementen gekoppelt, wobei über diesen Bolzen auch die Bewegungskopplung des Lagergehäuses zu der oder den Hydraulik- oder Pneumatikeinrichtungen gegeben ist. Letztere weist einen Hydraulik- oder Pneumatikkolben auf, der über ein Hydraulikfluid oder Druckluft mit Druck beaufschlagbar ist, und der mit einem oder mehreren Bolzen bewegungsgekoppelt ist. Die Hydraulik- oder Pneumatikeinrichtung ist vorzugsweise im Gehäuse integriert, so dass sich eine kompakte Einheit ergibt.

Diese Bewegungskopplung erfolgt zweckmäßigerweise über eine Koppelplatte, die der oder jeder Bolzen aufweist. Mit dieser Koppelplatte wirkt der Hydraulik- oder Pneumatikkolben zusammen, so dass eine Bewegung des Hydraulik- oder Pneumatikkolbens über diese Koppelplatte auf den oder die gekoppelten, über die Federelemente belasteten Bolzen übertragen wird. Dabei ist es zweckmä-ßig, wenn mehrere dieser Bolzen über eine gemeinsame Koppelplatte miteinander verbunden sind. Das heißt, dass eine Hydraulik- oder Pneumatikeinrichtung über diese eine Koppelplatte mehrere Bolzen betätigen kann. Sind beispielsweise zwei solcher Bolzen vorgesehen, so sind diese über eine gemeinsame Koppelplatte miteinander verbunden, an welcher Koppelplatte der Hydraulik- oder Pneumatikkolben angreift, so dass über eine gemeinsame Hydraulik- oder Pneumatikeinrichtung beide Bolzen betätigt werden können.

Die Verbindung des Hydraulik- oder Pneumatikkolbens mit einer Koppelplatte ist insbesondere dann einfach möglich, wenn der oder die Bolzen mit einem Ende aus dem Gehäuse ragen, wobei die Koppelplatte außerhalb des Gehäuses angeordnet ist. Das heißt, dass die federbelasteten Bolzen an der einen Seite aus dem Gehäuse geführt sind respektive an dieser Seite mit dem Lagergehäuse zusammenwirken, an der anderen Seite sind sie aus dem Gehäuse geführt und mit der Koppelplatte versehen.

Im Gehäuse selbst sind zweckmäßigerweise ein oder mehrere zylindrische Aufnahmen für jeweils ein Federelement und einen Bolzen vorgesehen, der das Federelement durchsetzt, wobei das oder jedes Federelement einerseits gehäuseseitig abgestützt ist und andererseits am Bolzen angreift.

Weiterhin ist zweckmäßigerweise im Gehäuse zur Bildung der Hydraulik- oder Pneumatikeinrichtung ein zylindrischer Aufnahmeraum vorgesehen, in dem der Hydraulik- oder Pneumatikkolben gelagert ist, und in welchen Aufnahmeraum über einen Anschluss das Hydraulikfluid oder die Druckluft geführt wird. Das heißt, dass die Hydraulik- oder Pneumatikeinrichtung unmittelbar gehäuseseitig integriert ist, nachdem der zylindrische Aufnahmeraum, also letztlich der Zylinder, in dem der Hydraulik- oder Pneumatikkolben geführt ist, direkt gehäuseseitig ausgebildet ist. Das Gehäuse selbst ist zweckmäßigerweise direkt am Anordnungsgehäuse befestigt, welches in der Montagestellung positionsfest am Maschinengestell verbaut ist.

### Kurze Beschreibung der Zeichnung

Eine bevorzugte Ausführungsform der erfindungsgemäß ausgebildeten Lageranordnung wird nachfolgend unter Bezugnahme auf die beigefügten Zeichnungen näher erläutert. Dabei zeigen:
- Figur 1: eine Prinzipdarstellung einer erfindungsgemäßen Stelleinrichtung für eine erfindungsgemäße Lageranordnung, in einer Schnittdarstellung, und
- Figur 2: eine erfindungsgemäße Lageranordnung mit dem Aktuator in einer geschnittenen Ansicht.

### Ausführliche Beschreibung der Zeichnung

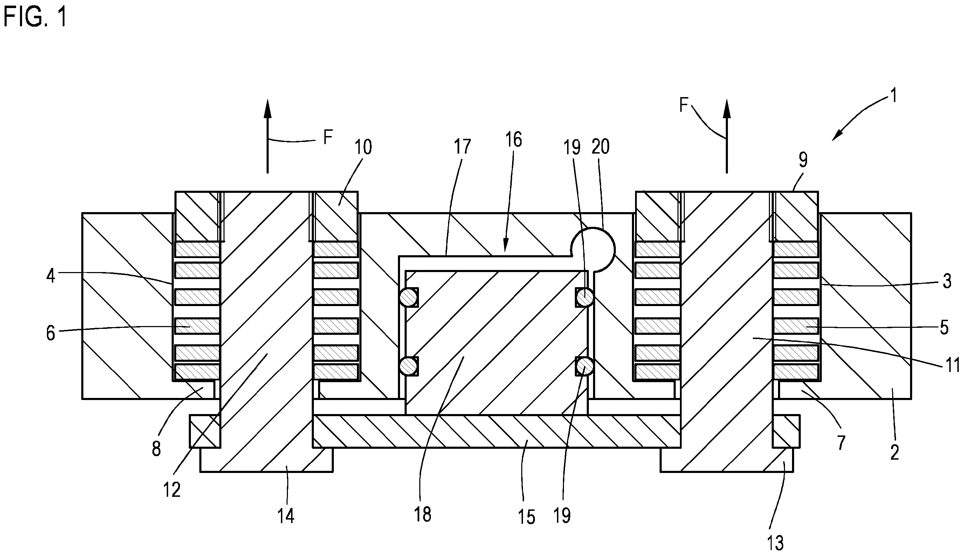

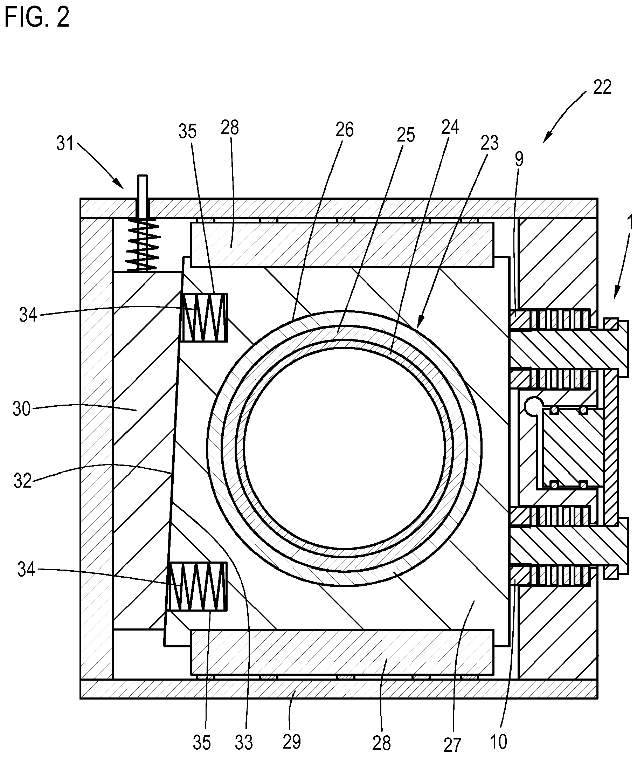

Figur 1 zeigt eine erfindungsgemäße Stelleinrichtung 1, umfassend ein Gehäuse 2, in dem im gezeigten Ausführungsbeispiel zwei zylindrische Aufnahmeräume 3, 4 vorgesehen sind, in denen jeweils ein Federelement 5, 6 aufgenommen ist. Es handelt sich jeweils um Hochleistungsfedern mit rechteckigem Windungsquerschnitt, die es ermöglichen, hohe Stellkräfte zu erzeugen. Die Federn sind mit einem Ende am jeweiligen Boden 7, 8 der Ausnehmung 3, 4 aufgelagert. Mit dem anderen Ende sind sie an einer Druckstück 9, 10 aufgelagert, die an jeweils einem Bolzen 11, 12, die in der Aufnahme 3, 4 angeordnet sind, vorgesehen, insbesondere daran angeschraubt, ist. Die Federelemente 5, 6 sind vorgespannt, sie ermöglichen es, eine Anpresskraft, wie durch die beiden Pfeile F gekennzeichnet ist, auf die Bolzen 11, 12 samt der Kolbenscheiben 9, 10 auszuüben, die diese aus dem Gehäuse 2 drückt. Mit diesen beiden Bolzen 11, 12 samt Kolbenscheiben 9, 10 ist ein Lagergehäuse, in dem ein Wälzlager, in dem wiederum ein Lagerzapfen des Bauteils aufgenommen ist, vorgesehen ist, gekoppelt, so dass dieses Lagergehäuse linear bewegt werden kann, worauf in Verbindung mit Figur 2 noch eingegangen wird.

Die Bolzen 11, 12 durchsetzen das Gehäuse 2 respektive die jeweiligen Aufnahmeräume 3, 4. An ihren beiden freien Enden sind sie mit entsprechenden im Durchmesser erweiterten Abschnitten 13, 14 versehen, über welche eine Koppelplatte 15, die die beiden Bolzen 11, 12 gehäuseaußenseitig miteinander verbindet, gelagert bzw. fixiert wird. Die Kolbenbewegung ist über diese Koppelplatte 15 gekoppelt.

Im Gehäuse 2 integriert ist ferner eine Hydraulik- oder Pneumatikeinrichtung 16. Diese wird durch einen zylindrischen Aufnahmeraum 17, der den Hydraulik- oder Pneumatikzylinder bildet, sowie eine darin beweglich geführten Hydraulik- oder Pneumatikkolben 18 gebildet. Am Hydraulik- oder Pneumatikkolben 18 sind im gezeigten Beispiel zwei Dichtringe 19 vorgesehen, über die er zum zylindrischen Aufnahmeraum 17 hin abgedichtet ist. Über einen entsprechenden Hydraulikfluid- oder Druckluftanschluss 20 kann das entsprechende Medium zugeführt werden, über welches der Hydraulik- oder Pneumatikkolben 18 aus dem zylindrischen Aufnahmeraum 17 und damit aus dem Gehäuse 2 herausgedrückt werden kann. Der Hydraulik- oder Pneumatikkolben 18 drückt mit seiner Planfläche gegen die Koppelplatte 15. Er drückt bei der in Figur 1 gezeigten symmetrischen Anordnung der beiden Bolzen 11, 12 seitlich zur Hydraulik- oder Pneumatikeinrichtung 16 letztlich mittig auf die Koppelplatte 15.

Die Funktion der Stelleinrichtung 1 ist nun derart, dass die Federelemente 5, 6, wenn die Hydraulik- oder Pneumatikeinrichtung 16 nicht betätigt wird, also drucklos ist, die beiden Bolzen 11, 12 aus dem Gehäuse 2 in Richtung der Kraftpfeile F herausdrücken. Ein damit gekoppeltes Lagergehäuse wird folglich, nachdem das Gehäuse 2 positionsfest ist, linear verschoben. Der Hydraulik- oder Pneumatikkolben 18 wird dabei in den zylindrischen Aufnahmeraum 17 über die Koppelplatte 15 bewegt.

Soll die Rückstellung erfolgen, so wird über den Anschluss 20 das entsprechende Druckmedium in den zylindrischen Aufnahmeraum 17 mit hohem Druck geführt, was dazu führt, dass der Hydraulik- oder Pneumatikkolben 18 aus dem zylindrischen Aufnahmeraum 17 und damit aus dem Gehäuse 2 herausgedrückt wird. Er drückt gegen die Koppelplatte 19, die wiederum die beiden Bolzen 11, 12 mitnimmt und quasi in das Gehäuse 2 zurückzieht. Die Federelemente 5, 6 werden dabei wieder komprimiert. Dieser Zustand bleibt solange aufrecht erhalten, bis die Hydraulik- oder Pneumatikeinrichtung wieder drucklos geschaltet wird. Dann schieben die beiden Federelemente 5, 6 (hier also die beiden Schraubenfedern) die beiden Bolzen 11, 12 wieder aus dem Gehäuse 2.

Figur 2 zeigt eine erfindungsgemäße Lageranordnung 22, die beispielsweise bei einer Druckmaschine verbaut wird und zum An- und Abstellen einer hierüber gelagerten Druckwalze dient. Die Lageranordnung umfasst ein Wälzlager 23, das beispielsweise als Zylinderrollenlager mit zylindrischen Rollen ausgeführt ist, hier jedoch nicht im Detail dargestellt ist. Es dient der Drehlagerung eines Lagerzapfens der Druckwalze oder - sollte die Lageranordnung 22 an einem anderen Maschinentyp verbaut sein - dem entsprechend zu lagernden drehendem Bauteil. Das Wälzlager 23 weist exemplarisch einen Innenring 24, den nicht näher gezeigten Wälzkörperkreis 25 sowie einen Außenring 26 auf, über den das Wälzlager 23 in einem Lagergehäuse 27 aufgenommen ist. Das Lagergehäuse 27 seinerseits ist über zwei Linearführungen 28 linear beweglich geführt, wobei diese Linearführung 28 lagefest an einem Anordnungsgehäuse 29, über das die Lageranordnung 22 maschinenseitig verbaut wird, vorgesehen sind.

Dem Lagergehäuse 27 zugeordnet ist die erfindungsgemäße Stelleinrichtung 1, die mit den beiden Bolzen 11, 12 nebst den Kolbenscheiben 9, 10 am Lagergehäuse 27 angreift. Die Stelleinrichtung 1 ist mit dem Anordnungsgehäuse 29 fest verbunden.

An der gegenüberliegenden Seite des Anordnungsgehäuses 29 ist ein Einstellkeil 30 vorgesehen, der über eine nicht näher gezeigte Stelleinrichtung 31 linear verschoben werden kann. Über die Position des Einstellkeils 30 respektive seiner Keilfläche 32 wird der maximale lineare Bewegungsweg des Lagergehäuses 27 definiert, das sich in der Arbeitsstellung mit einer entsprechenden Keilfläche 33 an die Keilfläche 32 anlegt.

Die Funktion der Lageranordnung ist wie folgt: Es sei angenommen, dass sich das Lagergehäuse 28 in der Ruhestellung befindet, in welcher es, ausgehend von der in Figur 2 gezeigten Arbeitsstellung, nach rechts verschoben ist und sich zwischen den beiden Keilflächen 32, 33 ein Spalt ergibt. Das Lagergehäuse 27 soll in die Arbeitsstellung bewegt werden. Hierzu ist es erforderlich, die Hydraulik- oder Pneumatikeinrichtung 16 drucklos zu schalten. Dies führt dazu, dass die beiden stark komprimierten Federelemente 5, 6 das Lagergehäuse 27, das wie beschrieben an den Bolzen 11, 12 nebst den Kolbenscheiben 9, 10 anliegt, in Figur 2 nach links bewegen, geführt über die Linearführungen 28. Diese Stellbewegung erfolgt solange, bis die Keilfläche 33 an der Keilfläche 32 anliegt. Die Federelemente 5, 6 sind in diesem Zustand natürlich noch nicht entspannt, sie drücken nach wie vor mit hoher Kraft auf das Lagergehäuse 27. Die Arbeitsstellung ist erreicht, das gelagerte Bauteil, beispielsweise eine Druckwalze, rotiert.

Soll nun ausgehend von dieser in Figur 2 gezeigten Arbeitsstellung die Lageranordnung 22 in die Ruhestellung gebracht werden, so wird über den Anschluss 20 Hydraulikfluid oder Druckluft zugeführt. Der Kolben 18 wird beaufschlagt und aus dem zylindrischen Aufnahmeraum 17 gedrückt, wobei er über die Koppelplatte 15 die beiden Bolzen 11, 12 mitnimmt. Das Lagergehäuse 27 wird entlastet. Über die beiden Rückstellfedern 34, die in entsprechenden Aufnahmen 35 am Lagergehäuse 27 angeordnet sind, und die in der Arbeitsstellung (siehe Figur 2) komprimiert an der Keilfläche 32 anliegen, wird nun das Lagergehäuse 27 von der Keilfläche 32 weggedrückt und ausgehend von Figur 2 nach rechts in die Ruhestellung geschoben. In dieser liegt das Lagergehäuse 27 an dem Gehäuse 2 an. Dieser Zustand bleibt solange aufrecht erhalten, solange die Hydraulik- oder Pneumatikeinrichtung 16 unter Druck steht. Wird sie wieder drucklos geschaltet, so schieben die Federelemente 5, 6 das Lagergehäuse 27 wieder in die in Figur 2 gezeigte Arbeitsstellung.

**Bezugszahlenliste**

| | | | |
|---|---|---|---|
| 1 | Stelleinrichtung | 33 | Keilfläche |
| 2 | Gehäuse | 34 | Rückstellfedern |
| 3 | Aufnahmeraum | 35 | Aufnahmen |
| 4 | Aufnahmeraum | | |
| 5 | Federelement | | |
| 6 | Federelement | | |
| 7 | Boden | | |
| 8 | Boden | | |
| 9 | Druckstück | | |
| 10 | Druckstück | | |
| 11 | Bolzen | | |
| 12 | Bolzen | | |
| 13 | Befestigungselement | | |
| 14 | Befestigungselement | | |
| 15 | Koppelplatte | | |
| 16 | Hydraulik- oder Pneumatikeinrichtung | | |
| 17 | Aufnahmeraum | | |
| 18 | Hydraulik- oder Pneumatikkolben | | |
| 19 | Dichtringe | | |
| 20 | Hydraulik- oder Druckanschluss | | |
| 22 | Lageranordnung | | |
| 23 | Wälzlager | | |
| 24 | Innenring | | |
| 25 | Wälzkörperkreis | | |
| 26 | Außenring | | |
| 27 | Lagergehäuse | | |
| 28 | Linearführungen | | |
| 29 | Anordnungsgehäuse | | |
| 30 | Einstellkreis | | |
| 31 | Stelleinrichtung | | |
| 32 | Keilfläche | | |

## Patentansprüche

1. Lageranordnung für ein um eine Achse drehend zu lagerndes Bauteil wie Zylinder, Walze, Trommel oder Welle, umfassend wenigstens ein Wälzlager, das in einem Lagergehäuse aufgenommen ist, das über wenigstens eine Linearführung linear bewegbar in einem Anordnungsgehäuse beweglich gelagert ist, sowie umfassend eine Stelleinrichtung zur Erwirkung einer linearen Verstellbewegung des Lagergehäuses senkrecht zur Achse zwischen einer Ruhestellung und einer Arbeitsstellung, **dadurch gekennzeichnet, dass** die Stelleinrichtung (1) wenigstens ein vorgespanntes Federelement (5, 6) umfasst, das das Lagergehäuse (27) in die Arbeitsstellung drückt, sowie wenigstens eine Hydraulik- oder Pneumatikeinrichtung (16) zur Erzeugung einer gegen das Federelement (5, 6) arbeitenden Rückstellkraft zum Bewegen des Lagergehäuses (27) in die Ruhestellung.

2. Lageranordnung nach Anspruch 1, **dadurch gekennzeichnet, dass** zwei oder mehr Federelemente (5, 6) vorgesehen sind, die symmetrisch relativ zu der einen oder zu den mehreren Hydraulik- oder Pneumatikeinrichtungen (16) verteilt angeordnet sind.

3. Lageranordnung nach Anspruch 1 oder 2, **dadurch gekennzeichnet, dass** die Stelleinrichtung (1) ein Gehäuse (2) umfasst, und dass dem oder jedem Federelement (5, 6) ein im Gehäuse (2) bewegbar angeordneter Bolzen (11, 12) zugeordnet ist, der vom Federelement (5, 6) gegen das Lagergehäuse (27) gedrückt wird, und der mit der von dem oder den Hydraulik- oder Pneumatikeinrichtungen (16) erzeugten Rückstellkraft beaufschlagbar ist.

4. Lageranordnung nach Anspruch 3, **dadurch gekennzeichnet, dass** die Hydraulik- oder Pneumatikeinrichtung (16) im Gehäuse (2) integriert ist.

5. Lageranordnung nach Anspruch 3 oder 4, **dadurch gekennzeichnet, dass** die oder jede Hydraulik- oder Pneumatikeinrichtung (16) einen Hydraulik- oder Pneumatikkolben (18) aufweist, der über ein Hydraulikfluid oder Druckluft mit Druck beaufschlagbar ist, und der mit einem oder mehreren Bolzen (11, 12) bewegungsgekoppelt ist.

6. Lageranordnung nach Anspruch 5, **dadurch gekennzeichnet, dass** der oder jeder Bolzen (11, 12) eine Koppelplatte (15) aufweist, mit der der Hydraulik- oder Pneumatikkolben (18) zusammenwirkt.

7. Lageranordnung nach Anspruch 6, **dadurch gekennzeichnet, dass** mehrere Bolzen (11, 12) über eine gemeinsame Koppelplatte (15) miteinander verbunden sind.

8. Lageranordnung nach Anspruch 6 oder 7, **dadurch gekennzeichnet, dass** der oder die Bolzen (11, 12) mit einem Ende aus dem Gehäuse (2) ragen, wobei die Koppelplatte (15) außerhalb des Gehäuses (2) angeordnet ist.

9. Lageranordnung nach einem der Ansprüche 3 bis 8, **dadurch gekennzeichnet, dass** im Gehäuse (2) ein oder mehrere zylindrische Aufnahmeräume (3, 4) für jeweils ein Federelement (5, 6) und einen Bolzen (11, 12), der das Federelement (5, 6) durchsetzt, vorgesehen sind, wobei das oder jedes Federelement (5, 6) einerseits gehäuseseitig abgestützt ist und andererseits am Bolzen (11, 12) angreift.

10. Lageranordnung nach einem der Ansprüche 4 bis 8, **dadurch gekennzeichnet, dass** im Gehäuse (2) zur Bildung der Hydraulik- oder Pneumatikeinrichtung (16) ein zylindrischer Aufnahmeraum (17) vorgesehen ist, in dem der Hydraulik- oder Pneumatikkolben (18) gelagert ist, und in welchen Aufnahmeraum über einen Anschluss (20) das Hydraulikfluid oder die Druckluft geführt wird.

## Claims

1. Bearing arrangement for a component to be mounted so as to rotate about an axis, such as a cylinder, roll, drum or shaft, comprising at least one antifriction bearing which is received in a bearing housing which is mounted movably in an arrangement housing such that it can be moved in a linear manner via at least one linear guide, and comprising an actuating device for bringing about a linear adjusting movement of the bearing housing perpendicularly with respect to the axis between a rest position and an operating position, **characterized in that** the actuating device (1) comprises at least one prestressed spring element (5, 6) which presses the bearing housing (27) into the operating position, and at least one hydraulic or pneumatic device (16) for generating a restoring force which operates counter to the spring element (5, 6) in order to move the bearing housing (27) into the rest position.

2. Bearing arrangement according to Claim 1, **characterized in that** two or more spring elements (5, 6) are provided which are arranged such that they are distributed symmetrically relative to the one or to the plurality of hydraulic or pneumatic devices (16).

3. Bearing arrangement according to Claim 1 or 2, **characterized in that** the actuating device (1) comprises a housing (2), and **in that** the or each spring element (5, 6) is assigned a pin (11, 12) which is arranged movably in the housing (2), is pressed by the spring element (5, 6) against the bearing housing (27), and can be loaded with the restoring force which is generated by the hydraulic or pneumatic device or devices (16).

4. Bearing arrangement according to Claim 3, **characterized in that** the hydraulic or pneumatic device (16) is integrated into the housing (2).

5. Bearing arrangement according to Claim 3 or 4, **characterized in that** the or each hydraulic or pneumatic device (16) has a hydraulic or pneumatic piston (18) which can be loaded with pressure via a hydraulic fluid or compressed air and is coupled in terms of movement to one or more pins (11, 12).

6. Bearing arrangement according to Claim 5, **characterized in that** the or each pin (11, 12) has a coupling plate (15), with which the hydraulic or pneumatic piston (18) interacts.

7. Bearing arrangement according to Claim 6, **characterized in that** a plurality of pins (11, 12) are connected to one another via a common coupling plate (15).

8. Bearing arrangement according to Claim 6 or 7, **characterized in that** the pin or the pins (11, 12) protrudes/protrude with one end out of the housing (2), the coupling plate (15) being arranged outside the housing (2).

9. Bearing arrangement according to one of Claims 3 to 8, **characterized in that** one or more cylindrical receiving spaces (3, 4) for in each case one spring element (5, 6) and one pin (11, 12) which penetrates the spring element (5, 6) are provided in the housing (2), the or each spring element (5, 6) being supported on one side on the housing side and acting on the other side on the pin (11, 12).

10. Bearing arrangement according to one of Claims 4 to 8, **characterized in that** a cylindrical receiving space (17) is provided in the housing (2) in order to form the hydraulic or pneumatic device (16), in which receiving space (17) the hydraulic or pneumatic piston (18) is mounted, and into which receiving space the hydraulic fluid or the compressed air is conducted via a connector (20).

## Revendications

1. Agencement de palier pour un composant devant être supporté en rotation autour d'un axe, tel qu'un cylindre, un rouleau, un tambour ou un arbre, comprenant au moins un palier à roulement qui est reçu dans un logement de palier, qui est supporté de manière déplaçable dans un boîtier d'agencement de manière à pouvoir être déplacé linéairement par le biais d'au moins un guide linéaire, et comprenant également un dispositif de commande pour réaliser un mouvement de déplacement linéaire du logement de palier perpendiculairement à l'axe entre une position de repos et une position de travail, **caractérisé en ce que** le dispositif de commande (1) comprend au moins un élément de ressort précontraint (5, 6) qui presse le logement de palier (27) dans la position de travail, ainsi qu'au moins un dispositif hydraulique ou pneumatique (16) pour générer une force de rappel agissant à l'encontre de l'élément de ressort (5, 6) pour déplacer le logement de palier (27) dans la position de repos.

2. Agencement de palier selon la revendication 1, **caractérisé en ce que** deux ou plus de deux éléments de ressort (5, 6) sont prévus, lesquels sont disposés de manière répartie symétriquement par rapport à l'un ou à la pluralité des dispositifs hydrauliques ou pneumatiques (16).

3. Agencement de palier selon la revendication 1 ou 2, **caractérisé en ce que** le dispositif de commande (1) comprend un boîtier (2) et **en ce qu'**un boulon (11, 12) disposé de manière déplaçable dans le boîtier (2) est associé à l'élément de ressort ou à chaque élément de ressort (5, 6), lequel est pressé par l'élément de ressort (5, 6) contre le logement de palier (27) et peut être sollicité avec la force de rappel générée par le ou les dispositifs hydrauliques ou pneumatiques (16).

4. Agencement de palier selon la revendication 3, **caractérisé en ce que** le dispositif hydraulique ou pneumatique (16) est intégré dans le boîtier (2).

5. Agencement de palier selon la revendication 3 ou 4, **caractérisé en ce que** le ou chaque dispositif hydraulique ou pneumatique (16) présente un piston hydraulique ou pneumatique (18) qui peut être sollicité en pression par le biais d'un fluide hydraulique ou d'air sous pression, et qui est accouplé en mouvement avec un ou plusieurs boulons (11, 12).

6. Agencement de palier selon la revendication 5, **caractérisé en ce que** le ou chaque boulon (11, 12) présente une plaque d'accouplement (15) avec laquelle coopère le piston hydraulique ou pneumatique (18).

7. Agencement de palier selon la revendication 6, **caractérisé en ce que** plusieurs boulons (11, 12) sont connectés les uns aux autres par le biais d'une plaque d'accouplement commune (15).

8. Agencement de palier selon la revendication 6 ou 7, **caractérisé en ce que** le ou les boulons (11, 12) font saillie par une extrémité hors du boîtier. (2), la plaque d'accouplement (15) étant disposée à l'extérieur du boîtier (2).

9. Agencement de palier selon l'une quelconque des revendications 3 à 8, **caractérisé en ce qu'**un ou plusieurs espaces de réception cylindriques (3, 4) sont prévus à chaque fois dans le boîtier (2) pour un élément de ressort (5, 6) et un boulon (11, 12) qui traverse l'élément de ressort (5, 6), le ou chaque élément de ressort (5, 6) étant d'une part supporté du côté du boîtier et d'autre part venant en prise sur le boulon (11, 12).

10. Agencement de palier selon l'une quelconque des revendications 4 à 8, **caractérisé en ce qu'**un espace de réception cylindrique (17) est prévu dans le boîtier (2) pour former le dispositif hydraulique ou pneumatique (16), dans lequel est supporté le piston hydraulique ou pneumatique (18), et dans lequel espace de réception le fluide hydraulique ou l'air sous pression est guidé par le biais d'un raccord (20).
